# EUROPEAN PATENT APPLICATION

(11) **EP 3 792 913 A1**
(43) Date of publication of application: **17.03.2021**
(21) Application number: 18928692.5
(22) Date of filing: 27.12.2018
(51) Int. Cl.: G10L 15/20, G10L 17/14

(54) **AUXILIARY SPEECH CONTROL METHOD AND DEVICE AND AIR CONDITIONER**

(30) Priority: 01.08.2018 CN 201810864305
(71) Applicant: Gree Electric Appliances, Inc. of Zhuhai, Zhuhai, Guangdong 519070 (CN)
(72) Inventor: LIU, Jianjun, Zhuhai, Guangdong 519070 (CN); WANG, Huijun, Zhuhai, Guangdong 519070 (CN)
(74) Representative: Zacco GmbH
(86) International application number: PCT/CN2018/124423
(87) International publication number: WO 2020/024546

(57) **Abstract**

The present disclosure discloses a method and apparatus for assisting in speech control and an air conditioner. By acquiring sound information in a current environment where a speech apparatus is located, recognizing environmental sound source distribution information in the current environment, determining a target area according to the environmental sound source distribution information, wherein a background noise of the target area is lower than background noises of other areas in the current environment, and sending out prompt information to prompt a user to move to the target area to provide a speech control instruction. The present disclosure solves the technical problem that the speech apparatus based on far-field recognition is prone to be influenced by a complex external environment, resulting in the incapacity to recognize the speech control instruction.

## Description

### Technical Field

The present disclosure relates to the field of intelligent household appliances, and in particular to a method and apparatus for assisting in speech control and an air conditioner.

### Background

As a popular man-machine interaction method at present, speech has been widely applied to various aspects of the field of intelligence in recent years, such as intelligent speakers, speech assistants of mobile terminals and speech input method applications. Various fields try to apply a speech technology to lead the trend of the intelligence, among which the field of household appliances is also taking the speech as an entry point to create an intelligent furniture ecological environment, and products involved include intelligent speech TVs, intelligent speech air conditioners, intelligent speech sweeper, etc.

However, in the related art, household appliance products based on far-field speech recognition are still trapped in a complex external environment. For example, in a speech recognition scene of an intelligent household appliance, noise interference often exists at the end away from the household appliance product, resulting in the problem that a speech control instruction of a user cannot be recognized.

For the above-mentioned problem, an effective solution has not yet been proposed at present.

### Summary

The embodiments of the present disclosure provide a method and apparatus for assisting in speech control and an air conditioner, so as to at least solve the technical problem that a speech apparatus based on far-field recognition is prone to be influenced by a complex external environment, resulting in the incapacity to recognize a speech control instruction.

According to one aspect of the embodiments of the present disclosure, a method for assisting in speech control is provided and applied to a speech control apparatus. The method may include: sound information in a current environment is acquired; environmental sound source distribution information in the current environment is recognized; a target area according to the environmental sound source distribution information is determined, wherein a background noise of the target area is lower than background noises of other areas in the current environment; and prompt information is sent out, wherein the prompt information is used for prompting a user to move to the target area to provide a speech control instruction, the speech control instruction being used for controlling the speech control apparatus.

Further, determining the target area according to the environmental sound source distribution information may include: object position distribution information in the current environment is obtained in advance; and the target area is determined according to the object position distribution information and the environmental sound source distribution information.

Further, obtaining the object position distribution information in the current environment in advance may include: object image information in the current environment and/or object image information, sent by the user, in the current environment is acquired; and object image recognizing on the object image information is performed to obtain the object position distribution information.

Further, before sending out the prompt information, the method further may include: the target area is updated every preset time interval according to the object position distribution information and the environmental sound source distribution information; or the target area according to the object position distribution information and the environmental sound source distribution information is updated when an update instruction from the user is received.

Further, before sending out the prompt information, the method further may include: whether the speech control instruction is clear is determined; the speech control instruction is recognized in the case that the clarity of the speech control instruction reaches a preset clarity threshold value; and the user is prompted to move to the target area to re-provide the speech control instruction when the clarity of the speech control instruction does not reach the preset clarity threshold value.

Further, sending out the prompt information may include at least one of the following: the prompt information is broadcasted by speech through the speech control apparatus; and the prompt information is displayed on a preset terminal.

According to another aspect of the embodiments of the present disclosure, an apparatus for assisting in speech control is provided and applied to a speech control device. The device may include: an acquisition unit, configured to acquire sound information in a current environment; a recognition unit, configured to recognize environmental sound source distribution information in the current environment; a determination unit, configured to determine a target area according to the environmental sound source distribution information, wherein a background noise of the target area is lower than background noises of other areas in the current environment; and a prompt unit, configured to send out prompt information, wherein the prompt information is configured to prompt a user to move to the target area to give a speech control instruction, the speech control instruction being configured to control the speech control apparatus.

According to yet another aspect of the embodiments of the present disclosure, an air conditioner is further provided. The air conditioner may include the above-mentioned apparatus for assisting in the speech control.

According to yet another aspect of the embodiments of the present disclosure, a memory medium is further provided. The memory medium may include a memorised program, wherein the program controls, during running, an apparatus where the memory medium is located to execute the above-mentioned method for assisting in the speech control.

According to yet another aspect of the embodiments of the present disclosure, a processor is further provided, and is characterized in that it is configured to run a program, wherein the program executes, during running, the above-mentioned method for assisting in the speech control.

In the embodiments of the present disclosure, by using a mode of assisting in speech recognition, by acquiring the sound information in the current environment where the speech apparatus is located, recognizing the environmental sound source distribution information in the current environment, determining the target area according to the environmental sound source distribution information and sending out the prompt information to prompt the user to move to the target area to provide the speech control instruction, the objective of assisting in the far-field speech recognition is achieved, thereby realizing the technical effect of accurately recognizing the far-field speech control instruction, so as to solve the technical problem that the speech apparatus based on the far-field recognition is prone to be influenced by the complex external environment, resulting in the incapacity to recognize the speech control instruction.

### Brief Description of the Drawings

The accompanying drawings described herein are used for providing further understanding of the present disclosure and constitute a part of the present disclosure, and the schematic embodiments of the present disclosure and the descriptions thereof are used for explaining the present disclosure and do not constitute an improper limitation on the present disclosure. In the accompanying drawings:
Fig. 1 is a schematic diagram of an optional method for assisting in speech control according to the embodiment of the present disclosure;
Fig. 2 is a schematic structural diagram of an optional apparatus for assisting in speech control according to the embodiment of the present disclosure; and
Fig. 3 is a schematic structural diagram of an optional air conditioner according to the embodiment of the present disclosure.

### Detailed Description of the Embodiments

In order to enable those skilled in the art to better understand the solution of the present disclosure, the technical solutions in the embodiments of the present disclosure will be clearly and completely described below in conjunction with the accompanying drawings in the embodiments of the present disclosure, and it is obvious that the embodiments described are merely a part of embodiments of the present disclosure, not all embodiments. On the basis of the embodiments of the present disclosure, all other embodiments obtained by those of ordinary skill in the art without making inventive efforts should all fall within the scope of protection of the present disclosure.

It should be noted that the "first", "second", etc. in the description, claims and above-mentioned accompanying drawings of the present disclosure are used for distinguishing similar subjects instead of being used for describing a specific order or precedence order. It should be understood that data used in this way may be interchanged where appropriate, so that the embodiments of the present disclosure described herein can be implemented in an order other than those orders illustrated or described herein. In addition, the terms "comprising" and "being provided with" and any variations thereof are intended to cover the non-exclusive inclusion, and for example, a process, method, system, product, or apparatus including a series of steps or units is not necessarily limited to those steps or units clearly listed, but may include other steps or units not clearly listed or inherent to such a process, method, product, or apparatus.

### Embodiment 1

Before the technical solution of the present embodiment is introduced, firstly an application scene of the embodiments of the present disclosure is described. The technical solutions of the embodiments of the present disclosure are mainly applied in speech control apparatuses, such as intelligent household appliances of a speech air conditioner, a speech TV, etc., wherein in general, the speech control apparatus is provided with a sound speech module, a sound source positioning system, etc., which are used for sounds collect and sound source location.

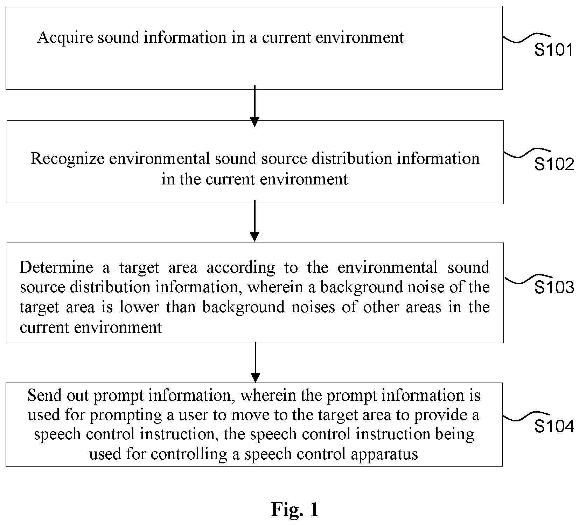

According to the embodiment of the present disclosure, a method for assisting in speech control is provided, and as shown in Fig. 1, the method includes:
S101, acquiring sound information in a current environment;
S102, recognizing environmental sound source distribution information in the current environment;
S103, determining a target area according to the environmental sound source distribution information, wherein a background noise of the target area is lower than background noises of other areas in the current environment; and
S104, sending out prompt information, wherein the prompt information is used for prompting a user to move to the target area to provide a speech control instruction, the speech control instruction being used for controlling the speech control apparatus.

It should be noted that, in a sound information acquisition process in the above-mentioned step S101, the background noise of an environment where the speech apparatus is located under normal circumstances is mainly acquired, and the sound information of the background noise in the current environment where the speech apparatus is located is acquired.

In a specific application scene, after sound information distribution of the background noise is acquired, a sound source position of the background noise is determined according to the acquired sound information. In general, there are multiple microphones, as sound acquisition apparatuses, in the speech control apparatus, multiple microphones may be integrated on the speech control apparatus or distributed in the current environment where the control apparatus is located, and therefore, in a general case, the acquired sound information includes the volume and time of a sound receiving by the multiple microphones from the same sound source, and the sound source position is determined by the difference in time at which the sound reaches different microphones. The above is only one example related to sound source distance measurement by the microphone, and in an actual application scene, there is a mature sound source positioning system to locate the sound source position of the background noise, and to recognize the sound information in the current environment.

In the embodiment of the present disclosure, by using a mode of assisting in speech recognition, by acquiring the sound information in the current environment where the speech apparatus is located, recognizing the environmental sound source distribution information in the current environment, determining the target area according to the environmental sound source distribution information and sending out the prompt information to prompt the user to move to the target area to provide the speech control instruction, the objective of assisting in far-field speech recognition is achieved, thereby realizing the technical effect of accurately recognizing the far-field speech control instruction, so as to solve the technical problem that the speech apparatus based on the far-field recognition is prone to be influenced by a complex external environment, resulting in the incapacity to recognize the speech control instruction.

As one preferred implementation, in the embodiment of the present disclosure, determining the target area according to the environmental sound source distribution information includes: object position distribution information in the current environment is obtained in advance; and the target area is determined according to the object position distribution information and the environmental sound source distribution information.

In a specific application scene, after the environmental sound source information in the current environment is obtained and noise source distribution in the current environment is determined, a target area which is suitable for the user to provide the speech control instruction can be determined. However, in addition to a noise source, there are still some static objects such as a wardrobe and a bookshelf in the current environment, which hinder the motion of the user, and therefore it is needed to separate a part of objects from the current environment. Hence, in the embodiment of the present disclosure, obtaining the object position distribution information in the current environment in advance and determining the target area according to the object position distribution information and the environmental sound source distribution information mean that in addition to determining the noise source position, it is still needed to exclude a position point which is not suitable for user movement and determine the target area suitable for user movement.

As one preferred implementation, in the embodiment of the present disclosure, obtaining the object position distribution information in the current environment in advance includes: object image information in the current environment and/or object image information, sent by the user, in the current environment is acquired; and object image recognizing on the object image information is performed to obtain the object position distribution information.

In the embodiment of the present disclosure, there are three ways to obtain the object position distribution information in the current environment, which particularly include the following three ways:
1) acquiring the object image information in the current environment and recognizing the object image from the object image information to obtain the object position distribution information,
   wherein particularly, the object image in the current environment is acquired by an image acquisition device such as a camera of the speech control apparatus itself, and then object distribution in the current environment is recognized according to a certain algorithm, and for example, the furniture layout in an entire room is photographed by the camera on an air conditioner, and then the object position distribution information in the current environment is recognized and screened on the basis of a pre-trained neural network algorithm;
2) acquiring the object image information, sent by the users, in the current environment and recognizing the object image from the object image information to obtain the object position distribution information,
   wherein particularly, the object image information, sent by the user, in the current environment may be received through the wireless connection with a preset terminal of the user, or imported through a memory device by the user, the above is only an example and will not cause any limitation on the above-mentioned object image information, and the above-mentioned object image information recognition process is not described in detail herein; and
3) acquiring the object image information in the current environment and the object image information, sent by the users, in the current environment and recognizing the object image from the object image information to obtain the object position distribution information,
   wherein particularly, the image information may be received by the image acquisition device of the speech control apparatus itself and meanwhile, the object image information sent by the user is received, and the optimal object position distribution information is determined by performing a certain algorithmic operation on the two pieces of image information.

As one preferred implementation, in the embodiment of the present disclosure, before sending out the prompt information, the method further includes: the target area is updated every a preset time interval according to the object position distribution information and the environmental sound source distribution information; or the target area according to the object position distribution information and the environmental sound source distribution information is updated when an update instruction from the user is received.

In a specific application scene, distribution of the target area in the current environment will be influenced by the change of an object position and the increase and decrease of a noise source, and therefore, it is needed to update, in real time, the target area in the current environment where the speech control apparatus is located; particularly, in one aspect, the target area may be updated periodically at a preset time interval, for example, the target area is updated periodically every hour and every day according to the object position distribution information and the environmental sound source distribution information in the current environment; in another aspect, the target area may be updated according to the speech control instruction sent by the user, and when an interval of the speech control instruction sent by the user is greater than a preset time threshold value, the target area is updated; and in yet another aspect, the target area may be updated according to the object position distribution information and the environmental sound source distribution information in the current environment when the update instruction of the user is received.

As one preferred implementation, in the embodiment of the present disclosure, before sending out the prompt information, the method further includes: whether the speech control instruction is clear is determined; the speech control instruction is recognized in the case that the clarity of the speech control instruction reaches a preset clarity threshold value; and the user is prompted to move to the target area to re-provide the speech control instruction when that the clarity of the speech control instruction does not reach the preset clarity threshold value.

In a specific application scene, determining, by determining whether speech control sent by the user is clear, whether to assist the user in the speech recognition; and in general, determining the clarity of the speech control instruction, and directly recognizing the speech control instruction by the speech control apparatus in the case that the clarity of the speech control instruction reaches the preset clarity threshold value and prompting the user to move to the target area to re-provide the speech control instruction when the clarity of the speech control instruction does not reach the preset clarity threshold value, so as to obtain a clearer speech control instruction.

As one preferred implementation, in the embodiment of the present disclosure, sending out the prompt information includes at least one of the following steps: the prompt information is broadcasted by speech through the speech control apparatus; and the prompt information is displayed on a preset terminal. As means for assisting in the speech control, the method assists in the speech control in the case that the speech control instruction sent by the user cannot be recognized, and broadcasts the prompt information to the user by speech through the speech control apparatus when the speech control apparatus has a speech broadcasting function; and preferably, the prompt information is displayed by an application in the preset terminal according a position of the preset terminal, that is, a schematic diagram of position distribution of the target area is displayed, wherein the preset terminal includes but is not limited to a mobile phone, a tablet computer, etc.

As an optional technical solution, in the embodiment of the present disclosure, after the target area where it is convenient for the user to provide the speech control instruction is determined, the method enhances the speech recognition of the target area, wherein enhancing the speech recognition of the target area includes but is not limited to arranging a speech acquisition device in the target area; and adjusting an orientation of the speech acquisition device in the speech control apparatus, etc.

By means of the embodiment of the present disclosure, by acquiring the sound information in the current environment where the speech apparatus is located, recognizing the environmental sound source distribution information in the current environment, determining the target area according to the environmental sound source distribution information and sending out the prompt information to prompt the user to move to the target area to provide the speech control instruction, the technical effect of accurately recognizing the far-field speech control instruction is realized, so as to solve the technical problem that the speech apparatus based on the far-field recognition is prone to be influenced by the complex external environment, resulting in the incapacity to recognize the speech control instruction.

It should be noted that all foregoing method embodiments are expressed as combinations of a series of actions for simplicity of description, but it should be understood by those skilled in the art that the present disclosure is not limited by the order of the actions described as some steps may be performed in other orders or concurrently in accordance with the present disclosure. Secondly, it should also be understood by those skilled in the art that the embodiments described in the description all belong to the preferred embodiments and the actions and modules involved are not necessarily required by the present disclosure.

Through description of the implementation above, those skilled in the art can clearly know that the method according to the above-described embodiment may be implemented by means of software plus a necessary general-purpose hardware platform or hardware certainly, but in many cases, the former is a more preferred implementation. With such understanding, the technical solution of the present disclosure, in essence or from the view of part contributing to the prior art, may be embodied in the form of a software product, wherein the computer software product is memorised in a memory medium (such as ROM/RAM, a magnetic disk and an optical disk) and includes a plurality of instructions configured to make a terminal apparatus (which may be a mobile phone, a computer, a server, a network apparatus, etc.) conduct the method in each of the embodiments of the present disclosure.

### Embodiment 2

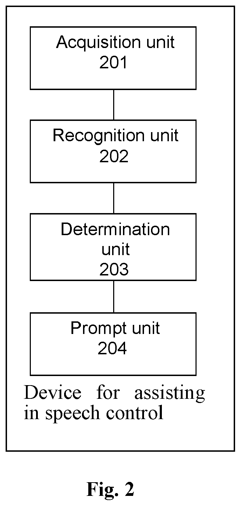

According to the embodiment of the present disclosure, an apparatus for assisting in speech control, which is configured to implement the above-mentioned method for assisting in the speech control, is further provided, and as shown in Fig. 2, the apparatus includes:
1) an acquisition unit 201, configured to acquire sound information in a current environment;
2) a recognition unit 202, configured to recognize environmental sound source distribution information in the current environment;
3) a determination unit 203, configured to determine a target area according to the environmental sound source distribution information, wherein a background noise of the target area is lower than background noises of other areas in the current environment; and
4) a prompt unit 204, configured to send out prompt information, wherein the prompt information is configured to prompt a user to move to the target area to give a speech control instruction, the speech control instruction being configured to control a speech control apparatus.

As an optional technical solution, in the embodiment of the present disclosure, the determination unit 203 includes:
1) an obtaining module, configured to obtain object position distribution information in the current environment in advance; and
2) a determination module, configured to determine the target area according to the object position distribution information and the environmental sound source distribution information.

Optionally, a particular example in the present embodiment can refer to the example described in the above-mentioned Embodiment 1, which is not described in detail herein in the present embodiment.

### Embodiment 3

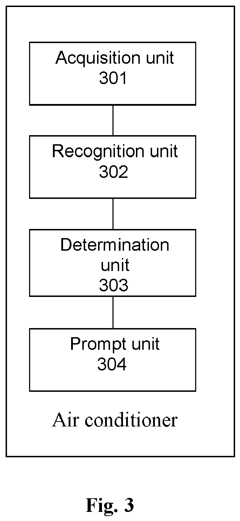

According to the embodiment of the present disclosure, an air conditioner configured to implement the above-mentioned device for assisting in the speech control is further provided, and as shown in Fig. 3, the air conditioner includes:
1) an acquisition unit 301, configured to acquire sound information in a current environment;
2) a recognition unit 302, configured to recognize environmental sound source distribution information in the current environment;
3) a determination unit 303, configured to determine a target area according to the environmental sound source distribution information, wherein a background noise of the target area is lower than background noises of other areas in the current environment; and
4) a prompt unit 304, configured to send out prompt information, wherein the prompt information is configured to prompt a user to move to the target area to give a speech control instruction, the speech control instruction being configured to control a speech control apparatus.

As an optional technical solution, in the embodiment of the present disclosure, the determination unit 303 includes:
1) an obtaining module, configured to obtain object position distribution information in the current environment in advance; and
2) a determination module, configured to determine the target area according to the object position distribution information and the environmental sound source distribution information.

Optionally, a particular example in the present embodiment can refer to the example described in the above-mentioned Embodiment 1, which is not described in detail herein in the present embodiment.

### Embodiment 4

The embodiment of the present disclosure further provides a memory medium. Optionally, in the present embodiment, the memory medium includes a memorised program, wherein the program controls, during running, an apparatus where the memory medium is located to execute the above-mentioned method for assisting in the speech control.

Optionally, in the present embodiment, the memory medium is set to memorise a program code configured to execute the following steps:
S1, acquiring sound information in a current environment;
S2, acquiring sound information in a current environment;
S3, determining a target area according to the environmental sound source distribution information, wherein a background noise of the target area is lower than background noises of other areas in the current environment; and
S4, sending out prompt information, wherein the prompt information is used for prompting a user to move to the target area to provide a speech control instruction, the speech control instruction being used for controlling the speech control apparatus.

Optionally, the memory medium is further set to memorise a program code configured to execute steps included in a method in the above-mentioned Embodiment 1, which is not described in detail herein in the present embodiment.

Optionally, in the present embodiment, the above-mentioned memory medium may include but is not limited to various media capable of memorising the program code, such as a USB flash disk, a Read-Only Memory (ROM), a Random Access Memory (RAM), a mobile hard disk, a magnetic disk, or an optical disk.

### Embodiment 5

The embodiment of the present disclosure further provides a processor, characterized in that it is used for running a program, wherein the program executes, during running, the above-mentioned method for assisting in the speech control.

Optionally, a particular example in the present embodiment can refer to the example described in the above-mentioned Embodiment 1, which is not described in detail herein in the present embodiment.

The serial numbers of the above-mentioned embodiments of the present disclosure are for description only and do not indicate the advantages and disadvantages of the embodiments.

The integrated unit in the above-described embodiment may be memorised in the above-mentioned computer-readable memory medium if implemented in the form of a software functional unit and sold or used as a stand-alone product. With such understanding, the technical solution of the present disclosure, in essence or from the view of part contributing to the prior art, or all or part of the technical solution may be embodied in the form of a computer software product that is memorised in the memory medium and includes a plurality of instructions configured to make one or more computer apparatuses (which may be personal computers, servers, network apparatuses, etc.) execute all or part of the steps of the method in each of the embodiments of the present disclosure.

In the above-mentioned embodiments of the present disclosure, description for each of the embodiments has its own emphasis, and the part which is not described in detail in a certain embodiment can refer to relevant description in other embodiments.

In the several embodiments provided by the present application, it should be understood that a disclosed client may be implemented in other ways. The apparatus embodiments described above are only schematic, for example, division of units is only a kind of division of logic functions, there may be other division modes in actual implementation, and for example, a plurality of units or modules may be combined or integrated into another system, or some features may be omitted or not executed. Further, mutual coupling or direct coupling or communication connection shown or discussed may be indirect coupling or communication connection by means of some interfaces, units or modules, or may be in electrical or other forms.

The unit described as a separable part may be physically separated or not, and a part shown as a unit may be a physical unit or not, that is, may be located at one place or may also be distributed on a plurality of network units. Parts or all of the units may be selected according to actual needs to achieve the objective of the solution of the present embodiment.

In addition, all functional units in each of the embodiments of the present disclosure may be integrated into one processing unit, or may be independently and physically present, or two or more units may be integrated into one unit. The above-mentioned integrated unit may be implemented in the form of hardware or a software functional unit.

The above mentioned description is merely the preferred implementation of the present disclosure, it should be pointed out that those of ordinary skill in the art may also make some improvements and modifications without departing from the principle of the present disclosure, and these improvements and modifications should also fall within the scope of protection of the present disclosure.

## Claims

1. A method for assisting in speech control, applied to a speech control device, the method comprising:
acquiring sound information in current environment;
recognizing environmental sound source distribution information in the current environment;
determining a target area according to the environmental sound source distribution information, wherein a background noise of the target area is lower than background noises of other areas in the current environment; and
sending prompt information, wherein the prompt information is used for prompting a user to move to the target area to provide a speech control instruction, the speech control instruction being used for controlling the speech control device.

2. The method as claimed in claim 1, wherein determining the target area according to the environmental sound source distribution information comprises:
obtaining object position distribution information in the current environment in advance; and
determining the target area according to the object position distribution information and the environmental sound source distribution information.

3. The method as claimed in according to claim 2, wherein obtaining the object position distribution information in the current environment in advance comprises:
acquiring object image information in the current environment and/or object image information, sent by the user, in the current environment; and
performing object image recognizing on the object image information to obtain the object position distribution information.

4. The method as claimed in claim 2, wherein before sending the prompt information, the method further comprises:
updating the target area every preset time interval according to the object position distribution information and the environmental sound source distribution information; or, when receiving an update instruction from the user, updating the target area according to the object position distribution information and the environmental sound source distribution information.

5. The method as claimed in claim 1, wherein before sending out the prompt information, the method further comprises:
determining whether the speech control instruction is clear;
recognizing the speech control instruction when the clarity of the speech control instruction reaches a preset clarity threshold value; and
prompting the user to move to the target area to re-provide the speech control instruction when the clarity of the speech control instruction does not reach the preset clarity threshold value.

6. The method as claimed in claim 1, wherein sending out the prompt information comprises at least one of the following:
broadcasting the prompt information by speech through the speech control apparatus; and
displaying the prompt information on a preset terminal.

7. An apparatus for assisting in speech control, applied to a speech control device, **characterized in that**, the apparatus comprising:
an acquisition unit, configured to acquire sound information in a current environment;
a recognition unit, configured to recognize environmental sound source distribution information in the current environment;
a determination unit, configured to determine a target area according to the environmental sound source distribution information, wherein a background noise of the target area is lower than background noises of other areas in the current environment; and
a prompt unit, configured to send out prompt information, wherein the prompt information is configured to prompt a user to move to the target area to give a speech control instruction, the speech control instruction being configured to control the speech control apparatus.

8. The apparatus as claimed in claim 7, **characterized in that**, the determination unit comprises:
an obtaining module, configured to obtain object position distribution information in the current environment in advance; and
a determination module, configured to determine the target area according to the object position distribution information and the environmental sound source distribution information.

9. An air conditioner, **characterized in that**, it comprises the apparatus for assisting in the speech control in claim 7 or 8.

10. A memory medium, **characterized in that**, it comprises a memorised program, wherein the program controls, during running, an apparatus where the memory medium is located to execute the method for assisting in the speech control in any one of claims 1-6.

11. A processor, **characterized in that**, it is configured to run a program, wherein the program executes, during running, the method for assisting in the speech control in any one of claims 1-6.
